# EUROPEAN PATENT APPLICATION

(11) **EP 4 170 755 A1**
(43) Date of publication of application: **26.04.2023**
(21) Application number: 20951952.9
(22) Date of filing: 03.09.2020
(51) Int. Cl.: H01M 4/58, H01M 4/36

(54) **POSITIVE ELECTRODE MATERIAL, POSITIVE ELECTRODE POLE PIECE, LITHIUM SECONDARY BATTERY, BATTERY MODULE, BATTERY PACK, AND APPARATUS**

(71) Applicant: Contemporary Amperex Technology Co., Limited, Fujian PRC 352100 (CN)
(72) Inventor: BIE, Changfeng, Ningde, Fujian 352100 (CN); LIU, Hongyu, Ningde, Fujian 352100 (CN); LIU, Na, Ningde, Fujian 352100 (CN)
(74) Representative: Rowlands, Stuart Michael
(86) International application number: PCT/CN2020/113286
(87) International publication number: WO 2022/047705

(57) **Abstract**

The present application relates to a positive electrode material, a positive electrode pole piece, a lithium secondary battery, a battery module, a battery pack, and an apparatus. The positive electrode material to which the present application relates comprises lithium iron phosphate single crystal particles and lithium iron phosphate secondary particles. The lithium iron phosphate secondary particles have a low specific surface area, and are capable of reducing the consumption of a binder and a solvent in a slurry preparation process, increasing the solid content in a slurry, and improving the processing performance of a thick coated pole piece. Meanwhile, the lithium iron phosphate single crystals are fully filled into particle gaps of the lithium iron phosphate secondary particles, further improving the compaction density of the pole piece, and reducing the diaphragm resistance of the positive electrode pole piece, thereby improving the gram capacity and the cycle performance of the lithium secondary battery..

## Description

### TECHNICAL FIELD

This application relates to the field of batteries, and specifically, to a positive-electrode material, a positive electrode plate, a lithium secondary battery, a battery module, a battery pack, and an apparatus.

### BACKGROUND

As a positive-electrode material for lithium-ion batteries, lithium iron phosphate shows advantages in safety, cycling performance, and cost, and is widely used in buses, passenger cars, and energy storage fields. However, the voltage platform, capacity performance, and an electrode compacted density of lithium iron phosphate batteries are relatively low. Compared with batteries that use ternary positive-electrode materials, lithium iron phosphate batteries do not deliver a satisfactory energy density.

It can be found through cell design calculation that the energy density of lithium-ion batteries can be significantly improved by increasing the coating weight per unit area of the active substance of the positive electrode plate, that is, the mass surface density of the active substance. In addition, the use efficiency of other materials (current collector, housing, electrolyte, and separator) can be increased, and overall costs of the cell can be reduced. However, if the positive-electrode material of a lithium-ion battery is lithium iron phosphate, the positive electrode plate is prone to cold pressing breakage or peeling during manufacture or use, which makes it difficult to achieve a high energy density.

Therefore, how to prepare lithium-ion batteries with high safety, long cycling life, and high energy density has become an urgent problem in the industry.

### SUMMARY

In view of the problem in the background, this application provides a positive-electrode material, a positive electrode plate, a lithium secondary battery, a battery module, a battery pack, and an apparatus.

According to a first aspect, this application provides a positive-electrode material, including a first positive-electrode active substance represented by formula (I) and a second positive-electrode active substance represented by formula (II):

LiFe₁₋ₓ₁M1ₓ₁PO₄ (I)

LiFe₁₋ₓ₂M2ₓ₂PO₄ (II)

where, 0≤x1≤0.1 and 0≤x2≤0.1. M1 and M2 are each independently selected from at least one of Cu, Mn, Cr, Zn, Pb, Ca, Co, Ni, Sr, or Ti, the first positive-electrode active substance is monocrystalline particles and the second positive-electrode active substance is secondary particles.

Compared with the prior art, this application at least has the following advantages:

The positive-electrode material according to this application includes the first positive-electrode active substance and the second positive-electrode active substance. The first positive-electrode active substance is lithium iron phosphate monocrystalline particles and the second positive-electrode active substance is lithium iron phosphate secondary particles. The lithium iron phosphate secondary particles have low specific surface area, which can reduce binder and solvent consumption during slurry preparation and increase a solid content of slurry. An improvement to the solid content of slurry can reduce processing difficulty of a thick-coating plate. When an active substance layer of the thick-coating plate is being dried, volatilization of a dispersion solvent decreases, volume strain of a membrane layer decreases, and segregation effect of a binder in a direction perpendicular to a surface of the plate is suppressed. The plate is not prone to coat falling, cracking, or peeling. In addition, lithium iron phosphate monocrystalline particles fully fill in gaps between the lithium iron phosphate secondary particles to increase adhesion between the lithium iron phosphate secondary particles and further improve a compacted density of the plate. Furthermore, this can improve flatness of a contact surface between the active substance and a current collector, help alleviate damages to a surface of the current collector caused by the lithium iron phosphate secondary particles during cold pressing of the plate, enhance toughness of the plate, and reduce possibility of plate cracking during processing. In addition, because production costs of lithium iron phosphate secondary particles are relatively low, technical solutions of this application can reduce overall costs of cells.

In the positive-electrode material provided in this application, the secondary particle is an agglomerate of a plurality of primary particles in pomegranate-like morphology. Optionally, the primary particle is a monocrystalline nanoparticle. Optionally, an average particle size d of the primary particle ranges from 20 nm to 500 nm. In this case, a particle size of the primary particles falls within an appropriate range, a rate of side reactions between the positive-electrode material and electrolyte and kinetic performance of a positive electrode of a battery are at proper levels, and capacity performance and cycling performance of the battery are good.

In the positive-electrode material provided in this application, the second positive-electrode active substance satisfies at least one of the following conditions: (1) A median particle size Dᵥ50 of the second positive-electrode active substance is 2.5 µm to 10.5 µm. Optionally, the median particle size Dᵥ50 of the second positive-electrode active substance is 4.5 µm to 8.5 µm. Further optionally, the median particle size Dᵥ50 of the second positive-electrode active substance is 6 µm to 7µm. (2) A specific surface area of the second positive-electrode active substance is 3.5 m²/g to 10.5 m²/g. Optionally, the specific surface area of the second positive-electrode active substance is 5 m²/g to 9 m²/g. Further optionally, the specific surface area of the second positive-electrode active substance is 6.5 m²/g to 7.5 m²/g.

When the median particle size Dᵥ50 and specific surface area BET of the second positive-electrode active substance fall within the ranges provided in this application, the particle size and the specific surface area of the second positive-electrode active substance are moderate, which is conducive to sufficient filling of the first positive-electrode active substance between gaps of the particles, ensuring a high compacted density of the plate, good flatness of a contact layer between the active substance and a current collector, and good processing performance of the plate. In addition, a solid content of a positive-electrode material mixed system slurry is within an appropriate range, which helps improve capacity performance and cycling performance of the battery.

In the positive-electrode material provided in this application, the monocrystalline particle is an independent particle with continuous internal lattice and almost no grain boundary separation.

In the positive-electrode material provided in this application, a powder resistivity of the first positive-electrode active substance under 12 Mpa is below 150 Ω·cm. Optionally, the powder resistivity of the first positive-electrode active substance under 12 Mpa is below 80 Ω·cm. Further optionally, the powder resistivity of the first positive-electrode active substance under 12 Mpa is below 30 Ω·cm.

As the powder resistivity of the first positive-electrode active substance decreases, conductivity of the first positive-electrode active substance increases, which helps improve the performance of electron migration between positive-electrode active substances, reduce the membrane resistance of the positive electrode plate, and improve the capacity performance and cycling performance of the battery.

In the positive-electrode material according to this application, the first positive-electrode active substance satisfies at least one of the following conditions: (1) a median particle size Dᵥ50 of the first positive-electrode active substance is 0.5 µm to 2.0 µm; and (2) a specific surface area of the first positive-electrode active substance is 6.0 m²/g to 20 m²/g.

When the median particle size Dᵥ50 of the first positive-electrode active substance ranges from 0.5 µm to 2.0 µm, the first positive-electrode active substance can fully fill in gaps of the lithium iron phosphate secondary particles of the second positive-electrode active substance, the compacted density of the plate is improved, and processing performance of the plate is improved. When the specific surface area of the first positive-electrode active substance ranges from 6.0 m²/g to 20 m²/g, binder consumption during slurry preparation is further reduced, a solid content of slurry is increased, and a large active specific surface area for electrochemical reaction is ensured.

In the positive-electrode material provided in this application, a mass percentage of the second positive-electrode active substance is greater than a mass percentage of the first positive-electrode active substance. Optionally, the mass percentage of the second positive-electrode active substance is 55% to 90%. Further optionally, the mass percentage of the second positive-electrode active substance is 60% to 85%. Still further optionally, the mass percentage of the second positive-electrode active substance is 65% to 80%.

In this embodiment of this application, a second active substance lithium iron phosphate has a low specific surface area. This can increase a solid content of slurry, reduce the processing difficulty of a thick-coating plate, and reduce production costs of the positive-electrode material. The first active substance lithium iron phosphate monocrystalline particle fills in gaps between the lithium iron phosphate secondary particles, further improving the compacted density of the plate and improving processing performance of the plate. When the mass percentage of the second positive-electrode active substance is greater than the mass percentage of the first positive-electrode active substance, that is, when the mass percentage of the second positive-electrode active substance is greater than 50%, a positive electrode plate with improved performance and reduced costs can be obtained. As the content of the second positive-electrode active substance further increases, the compacted density and processing performance of the plate also further improve. In addition, a proper amount of first positive-electrode active substance is needed to fill in the gaps between the lithium iron phosphate secondary particles. This increases the adhesion between the lithium iron phosphate secondary particles, improves the compacted density and processing performance of the plate, improves the performance of electron migration, and reduces the membrane resistance. When the mass percentage of the second positive-electrode active substance is 60% to 85% or further 65% to 80%, the first positive-electrode active substance synergizes with the second positive-electrode active substance to improve overall processing performance of the slurry and electric performance of the plate.

According to a second aspect, this application provides a positive electrode plate, including a positive-electrode active substance layer, and the positive-electrode active substance layer includes the positive-electrode material according to the first aspect of this application.

A coating weight per unit area on a single surface of the positive electrode plate according to this application is 140 g/m² to 390 g/m². Optionally, the coating weight per unit area on a single surface is 190 g/m² to 320 g/m². Further optionally, the coating weight per unit area on a single surface is 230 g/m² to 280 g/m².

In the positive electrode plate according to this application, a maximum solid content of positive-electrode slurry is increased so that a high coating weight and a large coating thickness can be achieved. As the coating weight and the coating thickness increase, battery volume utilization increases, which helps improve an energy density. However, a path for lithium ion migration becomes longer, diffusion impedance increases, lithium ion concentration polarization increases during battery discharge, and the battery capacity performance decreases. When the coating weight is 230 g/m² to 280 g/m², the energy density and cycling performance of the battery are optimal.

A membrane resistance of the positive electrode plate provided in this application is less than 2,000 mΩ. Optionally, the membrane resistance is less than 800 mΩ. Further optionally, the membrane resistance is less than 200 mΩ. The positive electrode plate according to this application has a low membrane resistance, which can improve the energy density and cycling performance of the battery.

According to a third aspect, this application provides a lithium secondary battery, including the positive electrode plate according to the second aspect of this application.

According to a fourth aspect, this application provides a battery module, including the lithium secondary battery according to the third aspect of this application.

According to a fifth aspect, this application provides a battery pack, including the battery module according to the fourth aspect of this application.

According to a sixth aspect, this application provides an apparatus, including the lithium secondary battery according to the third aspect of this application, the battery module according to the fourth aspect of this application, or the battery pack according to the fifth aspect of this application, where the lithium secondary battery, the battery module, or the battery pack is used as a power source or an energy storage unit of the apparatus.

Compared with a traditional lithium iron phosphate material, the positive-electrode material provided in this application has a significantly increased maximum solid content of slurry during preparation, reduced cracking of the thick-coated plate, increased adhesion between the membrane and currency collector, and decreased membrane resistance. If the positive-electrode material provided in this application is used to prepare a positive electrode plate and used in a lithium secondary battery, an energy density, kinetic performance, and cycling performance of the lithium secondary battery can be greatly improved. An apparatus that uses the lithium secondary battery, the battery module, or the battery pack according to this application as a power source or an energy storage unit can have good kinetic performance.

### BRIEF DESCRIPTION OF DRAWINGS

FIG. 1 shows scanning electron microscope diagrams of a second positive-electrode active substance according to an embodiment of this application at different magnifications, where a magnification of 1A is 1000X, a magnification of 1B is 5000X, and a magnification of 1C is 10000X;
FIG. 2 shows scanning electron microscope diagrams of a first positive-electrode active substance according to an embodiment of this application at different magnifications, where a magnification of 2A is 10000X and a magnification of 2B is 30000X;
FIG. 3 is a scanning electron microscope diagram of a section of a positive electrode plate according to an embodiment of this application;
FIG. 4 is a three-dimensional diagram of a lithium secondary battery according to an embodiment of this application;
FIG. 5 is an exploded view of the lithium secondary battery in FIG. 4;
FIG. 6 is a three-dimensional diagram of a battery module according to an embodiment of this application;
FIG. 7 is a three-dimensional diagram of a battery pack according to an embodiment of this application;
FIG. 8 is an exploded view of the battery pack in FIG. 7; and
FIG. 9 is a schematic diagram of an apparatus according to an embodiment of this application.

### Reference signs are as follows:

1. battery pack;
2. upper box body;
3. lower box body;
4. battery module;
5. lithium secondary battery;
51. housing;
52. electrode assembly; and
53. top cover assembly.

### DESCRIPTION OF EMBODIMENTS

This application is further described with reference to specific examples. It should be understood that these specific examples are merely used to describe this application but not to limit the scope of this application.

### Positive-electrode material

A first aspect of this application provides a positive-electrode material, including a first positive-electrode active substance represented by formula (I) and a second positive-electrode active substance represented by formula (II):

LiFe₁₋ₓ₁M1ₓ₁PO₄ (I)

LiFe₁₋ₓ₂M2ₓ₂PO₄ (II)

where, 0≤x1≤0.1 and 0≤x2≤0.1. M1 and M2 are each independently selected from at least one of Cu, Mn, Cr, Zn, Pb, Ca, Co, Ni, Sr, or Ti. The first positive-electrode active substance is monocrystalline particles and the second positive-electrode active substance is secondary particles.

The inventor of this application finds through research that during production of a lithium iron phosphate positive-electrode material, the positive-electrode material usually requires full nanocrystallization to improve the capacity performance and kinetic performance. However, during nanocrystallization, the lithium iron phosphate material has high specific surface energy. This makes it difficult to process the material and increases coat falling, cracking, and peeling of the plate when the positive electrode is thick-coated. In addition, at the same compacted density, a plate with a higher surface density requires a larger cold pressing pressure. During this process, particles of the positive-electrode material may damage a metal-based material. Defects that occur on the plate during cold pressing may cause subsequent breakage of the plate during winding or hot pressing of a bare core.

The inventors of this application found through further research that in this embodiment of this application, the second active substance lithium iron phosphate secondary particle has a low specific surface area. This can reduce consumption of binder and solvent during slurry preparation and increase a solid content of slurry. An improvement to the solid content of slurry can reduce the processing difficulty of a thick-coating plate. When an active substance layer of the thick-coating plate is being dried, volatilization of a dispersion solvent decreases, volume strain of a membrane layer decreases, and segregation effect of a binder in a direction perpendicular to a surface of the plate is suppressed. The plate is not prone to coat falling, cracking, or peeling. In addition, the first positive-electrode active substance lithium iron phosphate monocrystal fully fills in gaps between the lithium iron phosphate secondary particles to increase adhesion between the lithium iron phosphate secondary particles and further improve a compacted density of the plate. Furthermore, this can improve flatness of a contact surface between the active substance and a current collector, help alleviate damage to a surface of the current collector caused by the lithium iron phosphate secondary particles during cold pressing of the plate, enhance toughness of the plate, and reduce a possibility of plate cracking during processing.

In some embodiments of this application, the second positive-electrode active substance the lithium iron phosphate secondary particle is an agglomerate of a plurality of lithium iron phosphate primary particles in pomegranate-like morphology. The lithium iron phosphate primary particle is the minimum structural unit that forms the secondary particle and is an independent particle that has a low porosity and can be observed by using an electronic microscope.

In some embodiments of this application, an average particle size d of the primary particle ranges from 20 nm to 500 nm. In this application, when the average particle size d of the primary particle falls within the preceding range, a rate of side reactions between the positive-electrode material and an electrolyte and kinetic performance of a positive-electrode of a battery are at proper levels, and capacity performance and cycling performance of the battery are good. The average particle size d of the primary particle is obtained by collecting statistics on the particle sizes of primary particles. Specifically, in an SEM diagram, sizes of a plurality of primary particles in a length direction are measured and an average value is obtained.

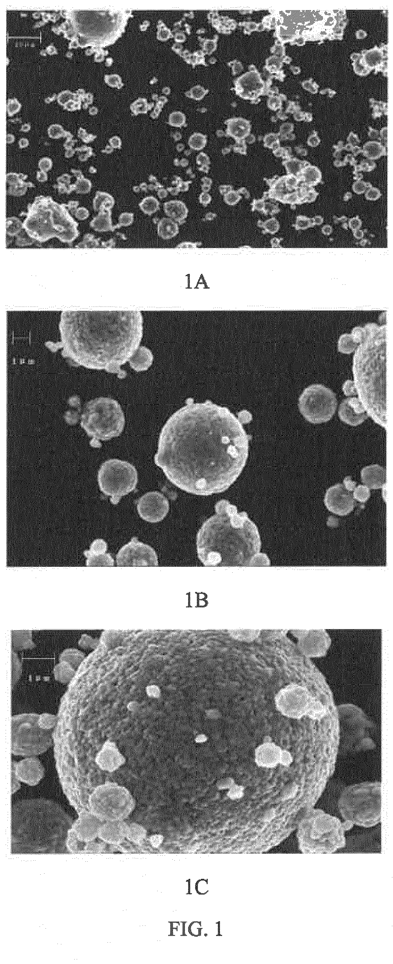

In some embodiments of this application, the lithium iron phosphate primary particle that is agglomerated to form the lithium iron phosphate secondary particle is a monocrystalline nanoparticle. FIG. 1 shows scanning electron microscope diagrams of a second positive-electrode active substance at different magnifications, where a magnification of 1A is 1000X, a magnification of 1B is 5000X, and a magnification of 1C is 10000X.

In some embodiments of this application, a median particle size Dᵥ50 of the second positive-electrode active substance is 2.5 µm to 10.5 µm. In some embodiments of this application, the median particle size Dᵥ50 of the second positive-electrode active substance is 4.5 µm to 8.5 µm. In some embodiments of this application, the median particle size Dᵥ50 of the second positive-electrode active substance is 6 µm to 7 µm. A value of the median particle size Dᵥ50 means that a volume of a particle whose median particle size is greater than this value and a volume of a particle whose median particle size is less than this value each account for 50% of the total volume.

In some embodiments of this application, a specific surface area of the second positive-electrode active substance is 3.5 m²/g to 10.5 m²/g. In some embodiments of this application, the specific surface area of the second positive-electrode active substance is 5 m²/g to 9 m²/g. In some embodiments of this application, the specific surface area of the second positive-electrode active substance is 6.5 m²/g to 7.5 m²/g.

When the median particle diameter Dᵥ50 and specific surface area BET of the second positive-electrode active substance fall within the preceding ranges, the particle size and specific surface area of the second positive-electrode active substance are moderate, which is conducive to filling of the first positive-electrode active substance between gaps of the particles and ensuring a high compacted density of the plate, good flatness of a contact layer between the active substance and a current collector, and good processing performance of the plate. In addition, a solid content of a positive-electrode material mixed system slurry is within an appropriate range, which helps improve capacity performance and cycling performance of the battery.

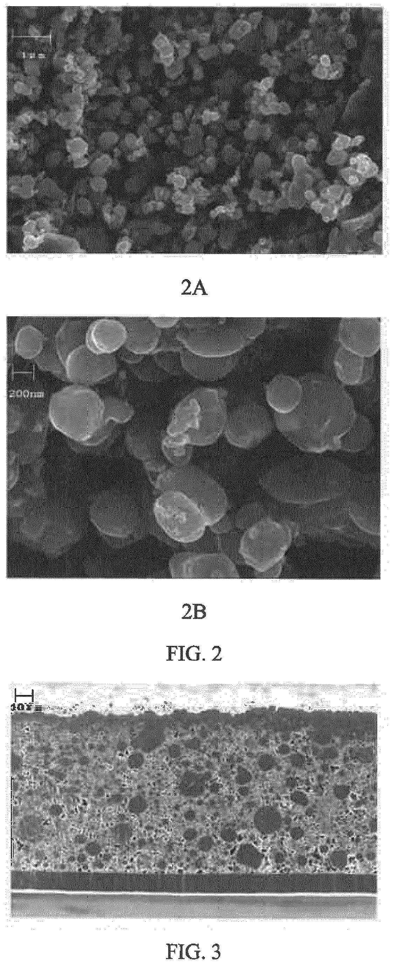

In some embodiments of this application, the first positive-electrode active substance lithium iron phosphate monocrystalline particle is an independent lithium iron phosphate particle with continuous internal lattice and almost no grain boundary separation. FIG. 2 shows scanning electron microscope diagrams of the first positive-electrode active substance at different magnifications, where a magnification of 2A is 10000X and a magnification of 2B is 30000X.

In some embodiments of this application, a powder resistivity of the first positive-electrode active substance under 12 Mpa is below 150 Ω·cm. In some embodiments of this application, the powder resistivity of the first positive-electrode active substance under 12 Mpa is below 80 Q cm. In some embodiments of this application, the powder resistivity of the first positive-electrode active substance under 12 Mpa is below 30 Q cm.

The powder resistivity of the first positive-electrode active substance is low and the conductivity is high, which helps improve the performance of electron migration between positive-electrode active substances, reduce the membrane resistance of the positive electrode plate, and improve the capacity performance and the cycling performance of the battery.

In some embodiments of this application, the median particle size Dᵥ50 of the first positive-electrode active substance ranges from 0.5 µm to 2.0 µm. This is conducive to sufficient filling of the first positive-electrode active substance in gaps of the second positive-electrode active substance lithium iron phosphate secondary particles, improving the compacted density of the plate, and improving processing performance of the plate.

In some embodiments of this application, the specific surface area of the first positive-electrode active substance the lithium iron phosphate monocrystalline particle ranges from 6.0 m²/g to 20 m²/g, which helps further reduce binder consumption during slurry preparation and increase a solid content of slurry.

In some embodiments of this application, a mass percentage of the second positive-electrode active substance is greater than a mass percentage of the first positive-electrode active substance. In some embodiments of this application, the mass percentage of the second positive-electrode active substance is 55% to 90%. In some embodiments of this application, the mass percentage of the second positive-electrode active substance is 60% to 85%. In some embodiments of this application, the mass percentage of the second positive-electrode active substance is 65% to 80%.

When the mass percentage of the second positive-electrode active substance is greater than the mass percentage of the first positive-electrode active substance, that is, when the mass percentage of the second positive-electrode active substance is greater than 50%, a positive electrode plate with improved performance and reduced costs can be obtained. As the content of the second positive-electrode active substance further increases, the compacted density and processing performance of the plate also further improve. In addition, a proper amount of first positive-electrode active substance is added and fills in the gaps between the lithium iron phosphate secondary particles. This increases the adhesion between the lithium iron phosphate secondary particles, improves the compacted density and processing performance of the plate, improves the performance of electron migration, and reduces the membrane resistance. When the mass percentage of the second positive-electrode active substance is 60% to 85% or further 65% to 80%, the first positive-electrode active substance synergizes with the second positive-electrode active substance to improve overall processing performance of the slurry and electric performance of the plate.

### Positive electrode plate

A second aspect of this application provides a positive electrode plate, including a positive-electrode active substance layer, and the positive-electrode active substance layer includes the positive-electrode material according to the first aspect of this application.

A positive electrode plate according to some embodiments of this application is sampled, and the plate is cut along a direction perpendicular to a surface of the plate by using an argon ion beam to expose a section of the positive electrode plate. FIG. 3 is a scanning electron microscope diagram of the section of the positive electrode plate. It can be seen from FIG. 3 that the first positive-electrode active substance the lithium iron phosphate monocrystalline particle fills in gaps between the second positive-electrode active substance lithium iron phosphate secondary particles.

In some embodiments of this application, a coating weight per unit area on a single surface of the positive electrode plate is 140 g/m² to 390 g/m². In some embodiments of this application, a coating weight per unit area on a single surface of the positive electrode plate is 190g/m² to 320 g/m². In some embodiments of this application, a coating weight per unit area on a single surface of the positive electrode plate is 230g/m² to 280 g/m².

In the positive electrode plate according to this embodiment of this application, a maximum solid content of positive-electrode slurry is increased so that a high coating weight and a large coating thickness can be achieved. As the coating weight and the coating thickness increase, battery volume utilization increases, helping improve energy density. However, a path for lithium ion migration becomes longer, diffusion impedance increases, lithium ion concentration polarization increases during battery discharge, and the battery capacity performance decreases. Therefore, the coating weight may affect capacity performance and cycling performance of the battery.

In some embodiments of this application, a membrane resistance of the positive electrode plate is less than 2,000 mΩ. In some embodiments of this application, the membrane resistance of the positive electrode plate is less than 800 mΩ. In some embodiments of this application, the membrane resistance of the positive electrode plate is less than 200 mΩ. A membrane resistance of a positive electrode plate is an overall resistance of the positive electrode plate after a positive-electrode active substance layer is disposed on upper and lower surfaces of a positive-electrode current collector at a room temperature. The positive electrode plate according to this embodiment of this application has advantages in low membrane resistance, a high cell energy density, and good cycling performance.

In some embodiments of this application, the positive electrode plate includes a positive-electrode current collector, and a positive-electrode active substance layer provided on at least one surface of the positive-electrode current collector. The positive-electrode substance layer may be provided on one surface of the positive-electrode current collector or on two surfaces of the positive-electrode current collector. The positive-electrode substance layer includes the positive-electrode material according to the first aspect of this application.

In some embodiments of this application, the positive-electrode active substance layer may further include a conductive agent and a binder. Specific types and percentages of the conductive agent and the binder are not limited, and the conductive agent and the binder may be selected based on an actual need. The binder typically includes a fluorine-containing polyolefin binder. For the fluorine-containing polyolefin binder, water is usually a good solvent. That is, the fluorine-containing polyolefin binder typically has good solubility in water. For example, the fluorine-containing polyolefin binder may include but is not limited to polyvinylidene fluoride (PVDF), vinylidene fluoride copolymer, or their modified (for example, modified by carboxylic acid, acrylic acid, or acrylonitrile) derivatives. In the positive-electrode active substance layer, an amount of the binder cannot be too large because the binder has poor conductivity. Optionally, a mass percentage of the binder in the electrode active substance layer is less than or equal to 2 wt% to obtain low plate resistance. The conductive agent of the positive electrode plate may be a variety of conductive agents applicable to lithium-ion (secondary) batteries in the field, for example, may include but is not limited to a combination of one or more of acetylene black, conductive carbon black, vapor grown carbon fiber (VGCF), carbon nanotube (CNT), Ketjen black, or the like. The weight of the conductive agent may account for 1 wt% to 10 wt% of the total weight of the positive-electrode active substance layer. Optionally, a weight ratio of the conductive agent to the positive-electrode active substance in the positive electrode plate is greater than or equal to 1.5:95.5.

In some embodiments of this application, specific types of the positive-electrode current collector are not limited, and the positive-electrode current collector may be selected based on an actual need. The positive-electrode current collector may typically be a layer. The positive-electrode current collector is typically a structure or a part that may collect current. The positive-electrode current collector may be made of various materials suitable for serving as a positive-electrode current collector for electrochemical energy storage apparatuses in the field. For example, the positive-electrode current collector may include but is not limited to a metal foil, and more specifically, may include but is not limited to a copper foil and an aluminum foil.

Those skilled in the art may select a suitable method for preparing the positive electrode plate. For example, the following steps may be included: mixing the positive-electrode material according to the first aspect of this application, a binder, and a conductive agent to form slurry, and applying the slurry on the positive-electrode current collector.

### Lithium secondary battery

A third aspect of this application provides a lithium secondary battery, including the positive electrode plate according to the second aspect of this application.

In some embodiments of this application, the lithium secondary battery may include a positive electrode plate, a negative-electrode plate, a separator sandwiched between the positive electrode plate and the negative-electrode plate, and an electrolytic solution. The positive electrode plate is the positive electrode plate according to the second aspect of this application.

A method for constructing and preparing the lithium secondary battery in this application is well known, except the positive electrode plate according to the second aspect of this application.

In some embodiments of this application, the negative-electrode plate of the lithium secondary battery typically includes a negative-electrode current collector and a negative-electrode active material layer provided on a surface of the negative-electrode current collector, and the negative-electrode active material layer typically includes a negative-electrode active material. The negative-electrode active material may be various negative-electrode active materials suitable for lithium secondary batteries in the field, for example, may include but is not limited to a combination of one or more of graphite, soft carbon, hard carbon, carbon fiber, a meso-carbon microbead, a silicon-based material, a tin-based material, lithium titanate, or other metals or the like that can form an alloy with lithium. The graphite may be selected from a combination of one or more of artificial graphite, natural graphite, and modified graphite. The silicon-based material may be selected from a combination of one or more of elemental silicon, a silicon-oxygen compound, a silicon-carbon composite, and a silicon alloy. The tin-based material may be selected from a combination of one or more of elemental tin, a tin-oxygen compound, and a tin alloy. The negative-electrode current collector is typically a structure or a part that collects current. The negative-electrode current collector may be made of various materials suitable for serving as a negative-electrode current collector for lithium secondary batteries in the field. For example, the negative-electrode current collector may include but is not limited to a metal foil, and more specifically, may include but is not limited to a copper foil. In addition, the negative-electrode plate may be a lithium plate.

In some embodiments of this application, the separator of the lithium secondary battery may be made of various materials suitable for separators of lithium secondary batteries in the field, for example, may include but is not limited to a combination of one or more of polyethylene, polypropylene, polyvinylidene fluoride, kevlar, polyethylene terephthalate, polytetrafluoroethylene, polyacrylonitrile, polyimide, polyamide, polyester, and natural fibers.

In some embodiments of this application, the electrolyte solution of the lithium secondary battery may be various electrolyte solutions suitable for lithium secondary batteries in the field. For example, the electrolyte solution usually includes an electrolyte and a solvent, and the electrolyte may usually include a lithium salt. More specifically, the lithium salt may be an inorganic salt and/or an organic lithium salt, and specifically, may include but is not limited to a combination of one or more of LiPF₆, LiBF₄, LiN(SO₂F)₂ (LiFSI for short), LiN(CF₃SO₂)₂ (LiTFSI for short), LiClO₄, LiAsF₆, LiB(C₂O₄)₂ (LiBOB for short), and LiBF₂C₂O₄ (LiDFOB for short). For another example, concentration of the electrolyte may be 0.8 mol/L to 1.5 mol/L. The solvent may be various solvents suitable for electrolyte solutions of lithium secondary batteries in the field, and the solvent of the electrolyte solution is usually a non-aqueous solvent, preferably, may be an organic solvent, and specifically, may include but is not limited to a combination of one or more of ethylene carbonate, propylene carbonate, butylene carbonate, pentene carbonate, dimethyl carbonate, diethyl carbonate, dipropyl carbonate, ethyl methyl carbonate, or halogenated derivatives thereof.

In some embodiments of this application, the method for preparing the lithium secondary battery should be known to those skilled in the art. For example, the positive electrode plate, the separator, and the negative-electrode plate each may be a layer, so that they can be cut to a target size and then stacked in sequence; can be alternatively wound to a target size to form a cell, and can be further combined with an electrolyte solution to form a lithium secondary battery.

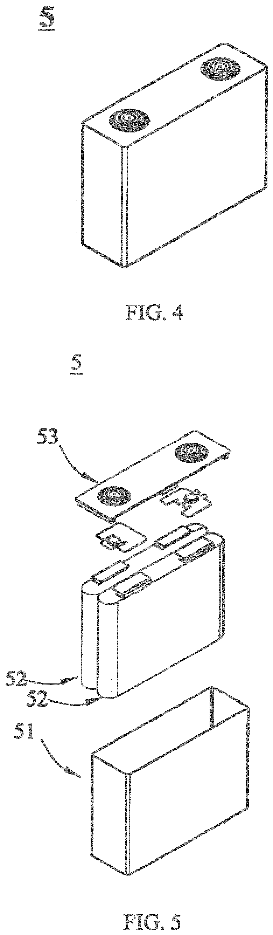

FIG. 4 is a three-dimensional diagram of a lithium secondary battery according to an embodiment of this application. FIG. 5 is an exploded view of the lithium secondary battery in FIG. 4. Referring to FIG. 4 and FIG. 5, the lithium secondary battery 5 (hereinafter referred to as the battery cell 5) according to this application includes an outer package 51, an electrode assembly 52, a top cover assembly 53, and an electrolytic solution (not shown). The electrode assembly 52 is accommodated in the housing 51. A quantity of the electrode assemblies 52 is not limited, and may be one or more.

It should be noted that the battery cell 5 in FIG. 4 is a tank type battery, but is not limited thereto in this application. The battery cell 5 may be a bag type battery, which means that the housing 51 is replaced with a metal plastic film and the top cover assembly 53 is eliminated.

### Battery module

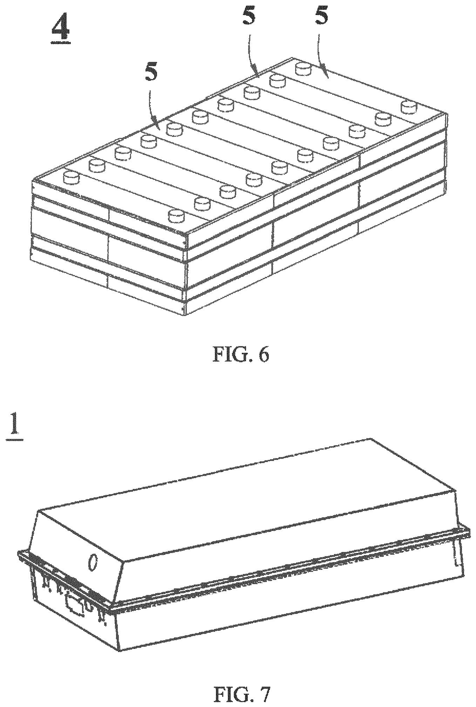

A fourth aspect of this application provides a battery module, including the lithium secondary battery according to the third aspect of this application. In some embodiments, the lithium secondary battery may be assembled into a battery module, and the battery module may include a plurality of lithium secondary batteries. A specific quantity may be adjusted based on use and capacity of the battery module. FIG. 6 is a three-dimensional diagram of a battery module 4 used as an example. Referring to FIG. 6, in the battery module 4, a plurality of lithium secondary batteries 5 may be sequentially arranged along a length direction of the battery module 4. Certainly, the plurality of lithium secondary batteries 5 may be arranged in any other manner. Further, the plurality of lithium secondary batteries 5 may be fastened by using fasteners. Optionally, the battery module 4 may further include a housing with an accommodating space, and the plurality of lithium secondary batteries 5 are accommodated in the accommodating space.

### Battery pack

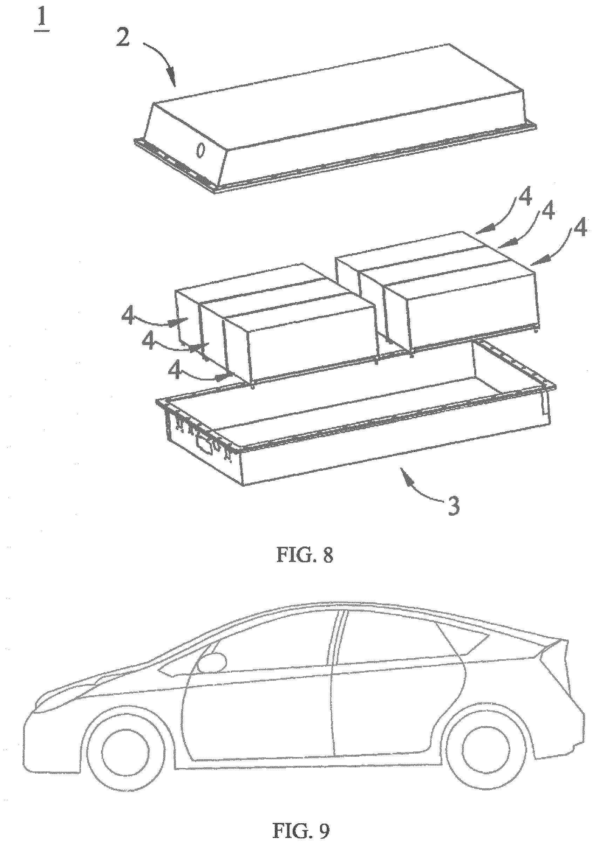

A fifth aspect of this application provides a battery pack, including the battery module according to the fourth aspect of this application. In some embodiments, the battery module may be assembled into a battery pack, and a quantity of battery modules included in the battery pack may be adjusted based on application and capacity of the battery pack. FIG. 7 is a three-dimensional diagram of a battery pack 1 used as an example, and FIG. 8 is an exploded view of the battery pack in FIG. 7. Referring to FIG. 7 and FIG. 8, the battery pack 1 may include a battery box and a plurality of battery modules 4 arranged in the battery box. The battery box includes an upper box body 2 and a lower box body 3. The upper box body 2 is able to cover the lower box body 3 to form enclosed space for accommodating the battery modules 4. The plurality of battery modules 4 may be arranged in the battery box in any manner.

### Apparatus

A sixth aspect of this application provides an apparatus, including the lithium secondary battery according to the third aspect of this application, the battery module according to the fourth aspect of this application, or the battery pack according to the fifth aspect of this application, where the lithium secondary battery, the battery module, or the battery pack is used as a power source of the apparatus or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium secondary battery, a battery module, or a battery pack may be selected for the apparatus according to requirements for using the apparatus.

FIG. 9 is a schematic diagram of an apparatus according to an embodiment of this application. The apparatus may be a battery electric vehicle, a hybrid electric vehicle, a plug-in hybrid electric vehicle, or the like. To meet a requirement of the apparatus for high power and a high energy density of a lithium-ion secondary battery (that is, the secondary battery in this application), a battery pack or a battery module may be used.

In another example, the apparatus may be a mobile phone, a tablet computer, a notebook computer, or the like. The apparatus usually requires lightness and thinness, and the lithium-ion secondary battery (that is, the secondary battery in this application) may be used as a power source.

A person skilled in the art may understand that the foregoing definitions or preferred ranges of component selection, component content, and material physicochemical performance parameters in electrochemical active materials in different embodiments of this application may be randomly combined, and various embodiments obtained through the combination shall still fall within the scope of this application and shall be considered as a part of content disclosed in this specification.

Unless otherwise specified, various parameters in this specification have general meanings well known in the art, and may be measured by using a method well known in the art. For example, a test may be conducted in a method provided in an example of this application. In addition, preferred ranges and options of different parameters provided in various preferred embodiments may be randomly combined, and it is considered that various combinations obtained therefrom shall fall within the disclosed scope of this application.

The following further describes advantages of this application with reference to specific examples. It should be understood that these examples are merely used to describe this application but not to limit the scope of this application.

### (1) Influence of parameters of a first active substance and a second active substance on technical effects of this application

### Examples 1 to 36 and Comparative Examples 1 and 2

### 1. Preparation of positive-electrode material:

The first positive-electrode active substance, a lithium iron phosphate monocrystalline particle, and the second positive-electrode active substance, a lithium iron phosphate secondary particle, were mixed at a mass percentage ratio to obtain a positive-electrode material.

### 2. Preparation of positive electrode plate:

The positive-electrode material, a binder polyvinylidene fluoride (PVDF), and carbon black were mixed at a mass ratio of 96.5:2.0: 1.5. A proper amount of an N-methylpyrrolidone (NMP) solvent was added. The resulting mixture was fully stirred and mixed to form a uniform positive-electrode slurry. The slurry was applied on a carbon coated aluminum foil of a positive-electrode current collector with a thickness of 13 µm, followed by drying, cold pressing, and slitting to obtain a positive electrode plate.

### 3. Obtaining of negative-electrode plate, separator, electrolyte, and housing by using conventional methods in the art:

Negative-electrode plate: A negative-electrode active material graphite, conductive carbon, and a binder polyvinylidene fluoride (PVDF) were fully stirred and mixed in a proper amount of water solvent at a mass ratio of 95:3:2 to form a uniform negative-electrode slurry. The slurry was applied on a negative-electrode current collector Cu foil, followed by drying, plate cold pressing, compacting, and slitting.
Separator: A 12 µm PP separator was used.
Electrolyte: A universal lithium iron phosphate electrolyte was used.
Housing: The housing was made of aluminum plastic film.

### 4. Preparation of lithium secondary battery:

The positive electrode plate, the separator, and the negative-electrode plate were wound to form a bare core. The aluminum plastic film was used to package the bare core. The electrolyte was injected, followed by formation, exhaustion, and high-temperature aging to obtain a lithium secondary battery.

Parameters of the positive-electrode material in Examples 1 to 36 and Comparative Examples 1 and 2 and performance of the positive electrode plate and lithium secondary battery may be tested by using conventional methods in the art. The following are examples of the testing methods:
1. Specific surface area BET of the first positive-electrode active substance:
   A specific surface area tester was used for testing. A model of the testing instrument was tristar 3020. A test procedure is briefly described as follows: 2.0 g to 4 g sample of a first positive-electrode active substance was taken. The sample was put into a sample tube and placed in a heating bag for degassing processing (degassing was performed at 200°C for 2 hours). After degassing was completed and a temperature of a degassing station decreased to a room temperature, the sample tube was removed from the degassing station and a total mass of the sample was weighed. A filling rod was put into the sample tube for BET testing to obtain a test result.
2. Median particle size Dᵥ50 of the first positive-electrode active substance:
   Testing instrument: laser particle size analyzer. Device model: Mastersizer 2000E or Mastersizer 3000. When particles of the positive-electrode material are lighted by a laser beam, an angle of scattered light is inversely proportional to the particle size and intensity of the scattered light decays logarithmically with an increase of the angle, and energy distribution of the scattered light is directly related to distribution of the particle size. A particle distribution characteristic can be obtained by receiving and measuring the energy distribution of the scattered light. A solvent used in the test may be water or another organic solvent used for preparing slurry. The sample was ultrasonically dispersed. The resulting Dᵥ50 value means that sizes of particles that account for 50% of the total volume are greater than the value and sizes of particles that account for the other 50% of the total value are less than the value.
3. Powder resistivity of the first positive-electrode active substance under 12 Mpa:
   Powder of the first positive-electrode active substance was dried and a proper amount of powder was weighed and taken. A powder resistivity tester with its device model being Suzhou Jingge ST2722 or Sunstest UTM7305 was used. The dried powder sample was put into a mold/sample chamber of the resistivity tester. The sample chamber is 20 mm deep and has a sectional area of 1 cm². Then a pressure was applied incrementally, data was manually collected, and powder resistivity test results corresponding to different pressure points were recorded.
4. Median particle size Dᵥ50 of the second positive-electrode active substance:
   The test was performed with reference to the test method for the median particle size Dᵥ50 of the first positive-electrode active substance.
5. Specific surface area BET of the second positive-electrode active substance:
   The test was performed with reference to the test method for the specific surface area of the first positive-electrode active substance.
6. Membrane resistance of the positive electrode plate:
   A membrane resistance testing system from Hangzhou Chuanyuan Technology Co., Ltd. ACCFLM was used and a two-probe method was used to test overall membrane resistance of the positive electrode plate (with positive-electrode active substance layers provided on both surfaces) according to this embodiment of this application.
7. Testing for adhesion between a membrane and a current collector:
   The positive electrode plate to be tested was taken and a sample that was 30 mm wide and 100 mm to 160 mm long was obtained by using a blade. In addition, a double-sided adhesive that was 20 mm wide and 90 mm to 150 mm long was pasted to a steel plate. The resulting plate sample was pasted to the double-sided adhesive, with a test surface facing downward. A paper tape with a width equal to that of the plate and a length of 80 mm to 200 mm greater than that of the plate was inserted below the plate and fastened by using a wrinkle stipple. Then a Sunstest tensile machine was used to test the adhesion between the membrane and the current collector.
8. Performance of capacity per gram:
   Capacity per gram of 1/3C at 25°C was used to represent capacity performance of the battery. A specific test procedure is briefly described as follows: (1) The battery was placed in an oven at 25°C and left standing for 2 hours until the battery temperature remained at 25°C. (2) 1/3C DC to 2.0 V (3) Charging was paused for 5 min. (4) 1/3C CC to 3.65 V and CV to I≤0.05C. (5) Charging was paused for 5 min. (6) 1/3C DC to 2.0 V In this step, an actual capacity of the cell was tested. The performance of capacity per gram can be obtained through calculation based on mass of the positive-electrode active substance.
9. Cycling performance test:
   A 1C/1C cycle at 60°C was used to test a number of cycles when the battery capacity faded to 80% of an initial value. A specific procedure is described as follows: (1) The battery was placed in an oven at 45°C and left standing for 2 hours until the battery temperature remained at 25°C. (2) The battery was charged to 3.65 V at a constant current of 1C, and continued charging at a constant voltage until the charging current is less than 0.05C. (3) Charging was paused for 5 min. (4) The battery was discharged to 2.5 V at a constant current of 1C. (5) Charging was paused for 5 min. Steps (2) to (5) were one charge-discharge cycle of the battery. Steps (2) to (5) were repeated continuously until the battery capacity faded to 80% of the initial value.

Table 1 shows related parameters of the positive-electrode materials in Examples 1 to 36 and Comparative Examples 1 and 2.

**Table 1**

| **Lithium iron phosphate monocrystalline particles** | | | | | | **Lithium iron phosphate secondary particles** | | | | |
|---|---|---|---|---|---|---|---|---|---|---|
| | BET (m²/g) | Dᵥ50 (um) | Formula | Mass percentage (%) | Powder resistivity under 12 Mpa (Ω·cm) | Formula | Mass percentage (%) | Dᵥ50 (um) | Average particle size of primary particles d (nm) | Specific surface area (m²/g) |
| Example 1 | 12 | 1.3 | LiFe_{0.98}Mn_{0.02}PO₄ | 30 | 5 | LiFe_{0.98}Mn_{0.02}PO₄ | 70 | 6.5 | 100 | 7 |
| Example 2 | 12 | 1.3 | LiFe_{0.98}Ni_{0.02}PO₄ | 30 | 5 | LiFe_{0.98}Ni_{0.02}PO₄ | 70 | 6.5 | 100 | 7 |
| Example 3 | 12 | 1.3 | LiFe_{0.98}Ti_{0.01}PO₄ | 30 | 5 | LiFe_{0.98}Ti_{0.01}PO₄ | 70 | 6.5 | 100 | 7 |
| Example 4 | 12 | 1.3 | LiFe_{0.98}Ti_{0.04}PO₄ | 30 | 5 | LiFe_{0.98}Ti_{0.04}PO₄ | 70 | 6.5 | 100 | 7 |
| Example 5 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Comparative Example 1 | 12 | 1.3 | LiFe_{0.98}Ti_{0.02}PO₄ | 100 | 5 | LiFe_{0.98}Ti_{0.02}PO₄ | 0 | / | / | / |
| Comparative Example 2 | / | / | LiFe_{0.98}Ti_{0.02}PO₄ | 0 | / | LiFe_{0.98}Ti_{0.02}PO₄ | 100 | 6.5 | 100 | 7 |
| | | | | | | | | | | |
| Example 6 | 12 | 1.3 | LiFe_{0.98}Ti_{0.02}PO₄ | 30 | 30 | LiFe_{0.98}Ti_{0.02}PO₄ | 70 | 6.5 | 100 | 7 |
| Example 7 | 12 | 1.3 | LiFe_{0.98}Ti_{0.02}PO₄ | 30 | 80 | LiFe_{0.98}Ti_{0.02}PO₄ | 70 | 6.5 | 100 | 7 |
| Example 8 | 12 | 1.3 | LiFe_{0.98}Ti_{0.02}PO₄ | 30 | 150 | LiFe_{0.98}Ti_{0.02}PO₄ | 70 | 6.5 | 100 | 7 |
| Example 9 | 12 | 1.3 | LiFe_{0.98}Ti_{0.02}PO₄ | 30 | 350 | LiFe_{0.98}Ti_{0.02}PO₄ | 70 | 6.5 | 100 | 7 |
| | | | | | | | | | | |
| Example 10 | 12 | 1.3 | LiFe_{0.98}Ti_{0.02}PO₄ | 30 | 5 | LiFe_{0.98}Ti_{0.02}PO₄ | 70 | 1.5 | 100 | 7 |
| Example 11 | 12 | 1.3 | LiFe_{0.98}Ti_{0.02}PO₄ | 30 | 5 | LiFe_{0.98}Ti_{0.02}PO₄ | 70 | 2.5 | 100 | 7 |
| Example 12 | 12 | 1.3 | LiFe_{0.98}Ti_{0.02}PO₄ | 30 | 5 | LiFe_{0.98}Ti_{0.02}PO₄ | 70 | 4.5 | 100 | 7 |
| Example 13 | 12 | 1.3 | LiFe_{0.98}Ti_{0.02}PO₄ | 30 | 5 | LiFe_{0.98}Ti_{0.02}PO₄ | 70 | 6 | 100 | 7 |
| Example 14 | 12 | 1.3 | LiFe_{0.98}Ti_{0.02}PO₄ | 30 | 5 | LiFe_{0.98}Ti_{0.02}PO₄ | 70 | 7 | 100 | 7 |
| Example 15 | 12 | 1.3 | LiFe_{0.98}Ti_{0.02}PO₄ | 30 | 5 | LiFe_{0.98}Ti_{0.02}PO₄ | 70 | 8.5 | 100 | 7 |
| Example 16 | 12 | 1.3 | LiFe_{0.98}Ti_{0.02}PO₄ | 30 | 5 | LiFe_{0.98}Ti_{0.02}PO₄ | 70 | 10.5 | 100 | 7 |
| Example 17 | 12 | 1.3 | LiFe_{0.98}Ti_{0.02}PO₄ | 30 | 5 | LiFe_{0.98}Ti_{0.02}PO₄ | 70 | 12.5 | 100 | 7 |
| | | | | | | | | | | |
| Example 18 | 12 | 1.3 | LiFe_{0.98}Ti_{0.02}PO₄ | 3() | 5 | LiFe_{0.98}Ti_{0.02}PO₄ | 70 | 6.5 | 100 | 2.5 |
| Example 19 | 12 | 1.3 | LiFe_{0.98}Ti_{0.02}PO₄ | 30 | 5 | LiFe_{0.98}Ti_{0.02}PO₄ | 70 | 6.5 | 100 | 3.5 |
| Example 20 | 12 | 1.3 | LiFe_{0.98}Ti_{0.02}PO₄ | 30 | 5 | LiFe_{0.98}Ti_{0.02}PO₄ | 70 | 6.5 | 100 | 5 |
| Example 21 | 12 | 1.3 | LiFe_{0.98}Ti_{0.02}PO₄ | 30 | 5 | LiFe_{0.98}Ti_{0.02}PO₄ | 70 | 6.5 | 100 | 6.5 |
| Example 22 | 12 | 1.3 | LiFe_{0.98}Ti_{0.02}PO₄ | 30 | 5 | LiFe_{0.98}Ti_{0.02}PO₄ | 70 | 6.5 | 100 | 7.5 |
| Example 23 | 12 | 1.3 | LiFe_{0.98}Ti_{0.02}PO₄ | 30 | 5 | LiFe_{0.98}Ti_{0.02}PO₄ | 70 | 6.5 | 100 | 9 |
| Example 24 | 12 | 1.3 | LiFe_{0.98}Ti_{0.02}PO₄ | 30 | 5 | LiFe_{0.98}Ti_{0.02}PO₄ | 70 | 6.5 | 100 | 10.5 |
| Example 25 | 12 | 1.3 | LiFe_{0.98}Ti_{0.02}PO₄ | 30 | 5 | LiFe_{0.98}Ti_{0.02}PO₄ | 70 | 6.5 | 100 | 12 |
| | | | | | | | | | | |
| Example 26 | 12 | 1.3 | LiFe_{0.98}Ti_{0.02}PO₄ | 30 | 5 | LiFe_{0.98}Ti_{0.02}PO₄ | 70 | 6.5 | 10 | 7 |
| Example 27 | 12 | 1.3 | LiFe_{0.98}Ti_{0.02}PO₄ | 30 | 5 | LiFe_{0.98}Ti_{0.02}PO₄ | 70 | 6.5 | 20 | 7 |
| Example 28 | 12 | 1.3 | LiFe_{0.98}Ti_{0.02}PO₄ | 30 | 5 | LiFe_{0.98}Ti_{0.02}PO₄ | 70 | 6.5 | 300 | 7 |
| Example 29 | 12 | 1.3 | LiFe_{0.98}Ti_{0.02}PO₄ | 30 | 5 | LiFe_{0.98}Ti_{0.02}PO₄ | 70 | 6.5 | 500 | 7 |
| Example 30 | 12 | 1.3 | LiFe_{0.98}Ti_{0.02}PO₄ | 30 | 5 | LiFe_{0.98}Ti_{0.02}PO₄ | 70 | 6.5 | 700 | 7 |
| | | | | | | | | | | |
| Example 31 | 12 | 1.3 | LiFe_{0.98}Ti_{0.02}PO₄ | 10 | 5 | LiFe_{0.98}Ti_{0.02}PO₄ | 90 | 6.5 | 100 | 7 |
| Example 32 | 12 | 1.3 | LiFe_{0.98}Ti_{0.02}PO₄ | 15 | 5 | LiFe_{0.98}Ti_{0.02}PO₄ | 85 | 6.5 | 100 | 7 |
| Example 33 | 12 | 1.3 | LiFe_{0.98}Ti_{0.02}PO₄ | 20 | 5 | LiFe_{0.98}Ti_{0.02}PO₄ | 80 | 6.5 | 100 | 7 |
| Example 34 | 12 | 1.3 | LiFe_{0.98}Ti_{0.02}PO₄ | 35 | 5 | LiFe_{0.98}Ti_{0.02}PO₄ | 65 | 6.5 | 100 | 7 |
| Example 35 | 12 | 1.3 | LiFe_{0.98}Ti_{0.02}PO₄ | 40 | 5 | LiFe_{0.98}Ti_{0.02}PO₄ | 60 | 6.5 | 100 | 7 |
| Example 36 | 12 | 1.3 | LiFe_{0.98}Ti_{0.02}PO₄ | 45 | 5 | LiFe_{0.98}Ti_{0.02}PO₄ | 55 | 6.5 | 100 | 7 |

Table 2 shows performance test results of Examples 1 to 36 and Comparative Examples 1 and 2.

**Table 2**

| | **Parameters of positive electrode plate** | | **Positive electrode processing performance** | | | **Battery performance** | |
|---|---|---|---|---|---|---|---|
| | Coating weight on one surface | Membrane resistance (mQ) | Maximum solid content of slurry | Plate cracking after coating | Adhesion between membrane and current collector | Capacity performance (mAh/g ) | 60 °C 1C/1C cycling performance (till 80% of initial capacity) |
| Example 1 | 250 | 200 | 68.20% | No cracking | High | 144.2 | 1980 |
| Example 2 | 250 | 200 | 67.90% | No cracking | High | 144.1 | 1920 |
| Example 3 | 250 | 200 | 68.50% | No cracking | High | 142.1 | 2210 |
| Example 4 | 250 | 200 | 67.20% | No cracking | High | 143.4 | 2350 |
| Example 5 | 250 | 200 | 68.30% | No cracking | High | 146.4 | 2550 |
| Comparative Example 1 | 250 | 400 | 52.00% | Severe cracking | Low | 120.4 | 550 |
| Comparative Example 2 | 250 | 1200 | 72.80% | No cracking | Low | 125.5 | 680 |
| | | | | | | | |
| Example 6 | 250 | 250 | 68.50% | No cracking | High | 142.2 | 2230 |
| Example 7 | 250 | 300 | 68.90% | No cracking | High | 140.2 | 2040 |
| Example 8 | 250 | 650 | 69.40% | No cracking | High | 138.1 | 1980 |
| Example 9 | 250 | 650 | 69.80% | No cracking | High | 136.2 | 1780 |
| | | | | | | | |
| Example 10 | 250 | 650 | 58.00% | Slight cracking | Lower | 132.7 | 1400 |
| Example 11 | 250 | 400 | 60.10% | No cracking | Higher | 135.2 | 1640 |
| Example 12 | 250 | 310 | 62.10% | No cracking | Higher | 136.2 | 1820 |
| Example 13 | 250 | 220 | 64.50% | No cracking | High | 142.4 | 2180 |
| Example 14 | 250 | 250 | 69.40% | No cracking | High | 143.1 | 2280 |
| Example 15 | 250 | 300 | 70.10% | No cracking | High | 137.1 | 1950 |
| Example 16 | 250 | 400 | 73.40% | No cracking | Higher | 134.1 | 1750 |
| Example 17 | 250 | 600 | 75.20% | Slight cracking | Lower | 132.3 | 1130 |
| | | | | | | | |
| Example 18 | 250 | 100 | 75.90% | No cracking | High | 130.2 | 1270 |
| Example 19 | 250 | 120 | 75.60% | No cracking | High | 136.1 | 1560 |
| Example 20 | 250 | 125 | 72.10% | No cracking | High | 139.1 | 1910 |
| Example 21 | 250 | 180 | 70.50% | No cracking | High | 142.4 | 2130 |
| Example 22 | 250 | 220 | 66.40% | No cracking | High | 142.1 | 2320 |
| Example 23 | 250 | 260 | 64.10% | No cracking | High | 140.2 | 2250 |
| Example 24 | 250 | 360 | 62.50% | No cracking | High | 136.2 | 1820 |
| Example 25 | 250 | 450 | 60.00% | Slight cracking | Lower | 132.2 | 1070 |
| | | | | | | | |
| Example 26 | 250 | 450 | 63.20% | No cracking | Higher | 148.1 | 1010 |
| Example 27 | 250 | 300 | 67.10% | No cracking | Higher | 146.1 | 1770 |
| Example 28 | 250 | 220 | 70.50% | No cracking | High | 135.4 | 2250 |
| Example 29 | 250 | 250 | 72.10% | No cracking | High | 132.4 | 2050 |
| Example 30 | 250 | 320 | 73.10% | No cracking | High | 130.2 | 1900 |
| | | | | | | | |
| Example 31 | 250 | 350 | 70.40% | No cracking | High | 140.4 | 1780 |
| Example 32 | 250 | 300 | 69.50% | No cracking | High | 142.4 | 1980 |
| Example 33 | 250 | 240 | 69.50% | No cracking | High | 143.1 | 2270 |
| Example 34 | 250 | 220 | 66.50% | No cracking | High | 142.4 | 2070 |
| Example 35 | 250 | 300 | 62.50% | No cracking | High | 138.4 | 1850 |
| Example 36 | 250 | 400 | 58.10% | No cracking | High | 136.4 | 1450 |

### Discussions on the data:

### (1) Examples 1 to 36 and Comparative Examples 1 and 2:

The positive-electrode material in Comparative Example 1 only includes lithium iron phosphate monocrystalline particles. It can be known from the test data in Table 2 that the positive electrode plate in Comparative Example 1 has relatively poor processing performance. Specifically, the maximum solid content of slurry of the positive-electrode material is very low, the coated plate has severe cracking, and the adhesion between the membrane and current collector is low. In addition, the capacity performance and the cycling performance of the lithium secondary battery in Comparative Example 1 are poor.

The positive-electrode material in Comparative Example 2 only includes lithium iron phosphate secondary particles. It can be known from the data in Table 2 that the positive electrode plate in the positive electrode plate in Comparative Example 2, although the maximum solid content of slurry is greatly increased and cracking of the coated plate is reduced, the adhesion between the membrane and current collector is very low, the membrane resistance of the positive electrode plate is relatively high, and the capacity performance and the cycling performance of the battery are poor.

The positive-electrode material in Examples 1 to 36 includes lithium iron phosphate monocrystalline particles and lithium iron phosphate secondary particles. Compared with Comparative Example 1 and Comparative Example 2, the processing performance of the positive-electrode in Examples 1 to 36 has improved, the maximum solid content of positive-electrode slurry is relatively high, and cracking of the thick-coated plate is reduced. The adhesion between the membrane and current collector is increased, the membrane resistance is reduced, and capacity performance and cycling performance of the battery are better than those in Comparative Example 1 and Comparative Example 2.

In addition, it can be learnt from Examples 1 to 5 that the positive-electrode material obtained by mixing lithium iron phosphate secondary particles and lithium iron phosphate monocrystalline particles doped with different elements can realize an effect of improved processing performance of the plate and increased battery capacity performance and cycling performance. Doping a Ti element provides the most significant improvement to the capacity performance and the cycling performance of the cell. A preferred doping amount of the Ti element in the positive-electrode material is 2,000 ppm.

### (2) Examples 5 to 9:

Examples 5 to 9 show an impact of a change in powder resistivity of the lithium iron phosphate monocrystalline particle under 12 Mpa on the plate processing performance and battery performance.

The powder resistivity of the first positive-electrode active substance lithium iron phosphate monocrystalline particle under 12 Mpa is below 150 Ω·cm, or below 80 Ω·cm, or further below 30 Ω·cm. As the powder resistivity of the lithium iron phosphate monocrystalline particle decreases, conductivity of the lithium iron phosphate monocrystalline particle increases. The performance of electron migration between positive-electrode active substances is relatively good, and the membrane resistance of the positive electrode plate decreases, which is conducive to the capacity performance and the cycling performance of the battery.

### (3) Example 5 and Examples 10 to 17:

Example 5 and Examples 10 to 17 show an impact of a change in the median particle size Dᵥ50 of the lithium iron phosphate secondary particle on the plate processing performance and battery performance.

When the median particle size Dᵥ50 of the lithium iron phosphate secondary particle is less than 2.5 µm, the secondary particle has a large specific surface area, which increases an absorption ability and may cause slight cracking to the membrane during drying. In addition, distribution of conductive carbon black of the active substance layer after coating is not even enough. This increases the membrane resistance. When the median particle size Dᵥ50 of the lithium iron phosphate secondary particle is greater than 10.5 µm, the first positive-electrode active substance does not fully fill in gaps between the particles. This is not conducive to improvement of the compacted density of the plate, affecting flatness of a contact surface between the active substance and current collector, affecting contact between the active substance and current collector, and increasing possibility of plate cracking during processing. When the Dᵥ50 of the lithium iron phosphate secondary particle ranges from 6.5 µm to 7 µm, the plate has good processing performance and adhesion between the membrane and current collector is good. This helps the capacity performance and the cycling performance of the battery achieve an optimal state.

### (4) Example 5 and Examples 18 to 25:

Example 5 and Examples 18 to 25 show an impact of a change in the specific surface area BET of the lithium iron phosphate secondary particle on the plate processing performance and battery performance.

When the specific surface area BET of the lithium iron phosphate secondary particle is less than 3.5 m²/g, electrochemical reaction activity of the lithium secondary battery is low, which affects the cycling performance of the battery to some extent. When the specific surface area BET of the lithium iron phosphate secondary particle is greater than 10.5 m²/g, an improvement of the solid content of positive-electrode slurry and plate processing performance is not significant. When the specific surface area BET of the lithium iron phosphate secondary particle ranges from 6.5 m²/g to 7.5 m²/g, the solid content of positive slurry and plate processing performance can be significantly improved, the electrochemical reaction activity of the battery can be ensured, and the capacity performance and the cycling performance of the battery can be significantly improved.

### (5) Example 5 and Examples 26 to 30:

Example 5 and Examples 26 to 30 show an impact of a change in the average particle size of the primary particles that are agglomerated to form the lithium iron phosphate secondary particle on the plate processing performance and battery performance.

When the average particle size d of the primary particles ranges from 20 nm to 500 nm, the particle sizes of the primary particles are in an appropriate range, a rate of side reactions between the positive-electrode material and the electrolyte and kinetic performance of the positive-electrode of the battery are at proper levels, and the capacity performance and cycling performance of the battery are good. When the average particle size d of the primary particles is less than 20 nm, the rate of side reactions between the positive-electrode material and the electrolyte is high. Although this is not conducive to initial capacity performance of the positive-electrode material, the cycling performance of the battery is low. When the average particle size d of the primary particles is greater than 500 nm, the processing performance of the positive-electrode slurry and the compacted density of the positive electrode plate are improved. However, the positive-electrode kinetic performance of the battery decreases, causing the capacity performance of the battery to decrease.

### (6) Example 5 and Examples 31 to 36:

Example 5 and Examples 31 to 36 show an impact of a change in the mass percentage of the lithium iron phosphate secondary particle and lithium iron phosphate monocrystalline particle on the plate processing performance and battery performance.

The lithium iron phosphate secondary particle has a low specific surface area. This can increase the solid content of slurry, reduce the processing difficulty of a thick-coating plate, and reduce production costs of the positive-electrode material. The lithium iron phosphate monocrystalline particle fills in gaps between the lithium iron phosphate secondary particles, further improving the compacted density of the plate and improving the processing performance of the plate. When the mass percentage of the second positive-electrode active substance is greater than the mass percentage of the first positive-electrode active substance, that is, when the mass percentage of the second positive-electrode active substance is greater than 50%, a positive electrode plate with improved performance and reduced costs can be obtained. As the content of the second positive-electrode active substance further increases, the compacted density and processing performance of the plate further improve. In addition, a proper amount of first positive-electrode active substance is added and fills in the gaps between the lithium iron phosphate secondary particles. This increases the adhesion between the lithium iron phosphate secondary particles, improves the compacted density and processing performance of the plate, improves the performance of electron migration, and reduces the membrane resistance. When the mass percentage of the second positive-electrode active substance is 60% to 85% or further 65% to 80%, the first positive-electrode active substance synergizes with the second positive-electrode active substance to improve overall processing performance of the slurry and electric performance of the plate.

### (2) Influence of a coating weight per unit area on a single surface of the positive electrode plate on technical effects of this application

### Examples 37 to 44

The method for preparing a positive-electrode material and lithium secondary battery in Examples 37 to 44 is basically the same as that in Example 5, except that a coating weight on a single surface of the positive electrode plate is changed.

Furthermore, for the positive electrode plate and lithium secondary battery in Examples 37 to 44, the energy density of the lithium secondary battery was tested in addition to the performance testing in Examples 1 to 36.

A method for testing the energy density of the lithium secondary battery is as follows: (1) The battery was placed in a 25°C oven environment and stood for 2 hours until the battery temperature remained at 25°C. (2) 1/3C DC to 2.0 V (3) Charging was paused for 5 min. (4) 1/3C CC to 3.65 V and CV to I≤0.05C. (5) Charging was paused for 5 min. (6) 1/3C DC to 2.0 V In this step, an actual capacity of the cell was tested. The performance of capacity per gram can be obtained through calculation based on mass of the positive-electrode active substance. An energy value of the cell may be obtained through calculation based on a voltage-capacity curve. Energy value/Core weight value = Energy density.

Table 3 shows related parameters of the positive-electrode materials in Examples 37 to 44.

**Table 3**

| **Lithium iron phosphate monocrystalline particles** | | | | | | **Lithium iron phosphate secondary particles** | | | | |
|---|---|---|---|---|---|---|---|---|---|---|
| | BET (m²/g) | Dᵥ50 (um) | Formula | Mass percentage (%) | Powder resistivity under 12 Mpa (Ω·cm) | Formula | Mass percentage (%) | Dᵥ50 (um) | Average particle size of primary particles d (nm) | Specific surface area (m²/g) |
| Example 37 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 38 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 39 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 40 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 41 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 42 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 43 | 12 | 1.3 | LiFe_{0.98}Ti_{0.02}PO₄ | 30 | 5 | LiFe_{0.98}Ti_{0.02}PO₄ | 70 | 6.5 | 100 | 7 |
| Example 44 | 12 | 1.3 | LiFe_{0.98}Ti_{0.02}PO₄ | 30 | 5 | LiFe_{0.98}Ti_{0.02}PO₄ | 70 | 6.5 | 100 | 7 |

Table 4 shows performance test results of the positive electrode plates and lithium secondary batteries in Examples 37 to 44.

**Table 4**

| | Parameters of positive electrode plate | | | Positive electrode processing performance | | | | Battery performance | | |
|---|---|---|---|---|---|---|---|---|---|---|
| | Coating weight on one surface | Membrane resistance (mΩ) | | Maximum solid content of slurry | Plate cracking after coating | Adhesion between membrane and current collector | | Capacity performance (mAh/g) | Energy density of cell | 60°C 1C/1C cycling performance (till 80% of initial capacity) |
| Example 37 | 450 | 430 | | 68.60% | cracking | Low | | 132.2 | 150 | 1020 |
| Example 38 | 390 | 340 | | 68.30% | Slight cracking | Higher | | 135.1 | 158 | 1650 |
| Example 39 | 320 | 290 | | 68.30% | No cracking | High | | 138.4 | 164 | 1950 |
| Example 40 | 280 | 260 | | 68.30% | No cracking | High | | 142.4 | 168 | 2240 |
| Example 41 | 230 | 150 | | 68.30% | No cracking | High | | 144.9 | 156 | 2595 |
| Example 42 | 190 | 100 | | 68.10% | No cracking | High | | 145.4 | 154 | 2690 |
| Example 43 | 140 | 80 | | 68.10% | No cracking | High | | 146.4 | 148 | 2760 |
| Example 44 | 100 | 50 | | 68.40% | No cracking | High | | 148.2 | 140 | 2890 |

### Discussions on the data:

Examples 37 to 44 show an impact of the coating weight per unit area on a single surface of the positive electrode plate on the technical effects of this application.

The positive-electrode material according to this application may be used to prepare a positive-electrode slurry with a relatively high solid content and further to obtain a plate with a high coating weight and a large coating thickness. As the coating weight and the coating thickness increase, battery volume utilization increases, which helps improve the energy density. However, a path for lithium ion migration also becomes longer, diffusion impedance increases, lithium ion concentration polarization increases during battery discharge, and the battery capacity performance decreases. When the coating weight is 230 g/m² to 280 g/m², the energy density and the cycling performance of the battery is optimal.

According to the disclosure and teaching of this specification, those skilled in the art may further make changes or modifications to the foregoing embodiments. Therefore, this application is not limited to the foregoing disclosure and the described embodiments, and some changes or modifications to this application shall also fall within the protection scope of the claims of this application. In addition, although some specific terms are used in this specification, these terms are used only for ease of description, and do not constitute any limitation on this application.

## Claims

1. A positive-electrode material, comprising a first positive-electrode active substance represented by formula (I) and a second positive-electrode active substance represented by formula (II):
LiFe₁₋ₓ₁M1ₓ₁PO₄ (I)
LiFe₁₋ₓ₂M2ₓ₂PO₄ (II)
wherein, 0≤x1≤0.1, 0≤x2≤0.1, and M1 and M2 are each independently selected from at least one of Cu, Mn, Cr, Zn, Pb, Ca, Co, Ni, Sr, or Ti; and
the first positive-electrode active substance is monocrystalline particles and the second positive-electrode active substance is secondary particles.

2. The positive-electrode material according to claim 1, wherein the secondary particle is an agglomerate of a plurality of primary particles in pomegranate-like morphology, wherein
optionally, the primary particle is a monocrystalline nanoparticle; and
optionally, a particle size d of the primary particle ranges from 20 nm to 500 nm.

3. The positive-electrode material according to claim 1 or 2, wherein the second positive-electrode active substance satisfies at least one of the following conditions:
(1) a median particle size Dᵥ50 of the second positive-electrode active substance is 2.5 µm to 10.5 µm, optionally 4.5 µm to 8.5 µm, and further optionally 6 µm to 7 µm; and
(2) a specific surface area of the second positive-electrode active substance is 3.5 m²/g to 10.5 m²/g, optionally 5 m²/g to 9 m²/g, and further optionally 6.5 m²/g to 7.5 m²/g.

4. The positive-electrode material according to claim 1, wherein the monocrystalline particle is an independent particle with continuous internal lattice and almost no grain boundary separation.

5. The positive-electrode material according to claim 1 or 4, wherein a powder resistivity of the first positive-electrode active substance under 12 Mpa is below 150 Ω·cm, optionally below 80 Ω·cm, and further optionally below 30 Ω·cm.

6. The positive-electrode material according to claim 1, 4, or 5, wherein the first positive-electrode active substance satisfies at least one of the following conditions:
(1) a median particle size Dᵥ50 of the first positive-electrode active substance is 0.5 µm to 2.0 µm; and
(2) a specific surface area of the first positive-electrode active substance is 6.0 m²/g to 20 m²/g.

7. The positive-electrode material according to any one of claims 1 to 6, wherein a mass percentage of the second positive-electrode active substance is greater than a mass percentage of the first positive-electrode active substance, and optionally, the mass percentage of the second positive-electrode active substance is 55% to 90%, further optionally 60% to 85%, and still further optionally 65% to 80%.

8. A positive electrode plate, comprising a positive-electrode active substance layer, wherein the positive-electrode active substance layer comprises the positive-electrode material according to any one of claims 1 to 7.

9. The positive electrode plate according to claim 8, wherein a coating weight per unit area on a single surface of the positive electrode plate is 140 g/m² to 390 g/m², optionally 190 g/m² to 320 g/m², and further optionally 230 g/m² to 280 g/m².

10. The positive electrode plate according to claim 8 or 9, wherein a membrane resistance of the positive electrode plate is less than 2,000 mΩ, optionally less than 800 mΩ, and further optionally less than 200 mΩ.

11. A lithium secondary battery, comprising the positive electrode plate according to any one of claims 8 to 10.

12. A battery module, comprising the lithium secondary battery according to claim 11.

13. A battery pack, comprising the battery module according to claim 12.

14. An apparatus, comprising the lithium secondary battery according to claim 11, the battery module according to claim 12, or the battery pack according to claim 13, wherein the lithium secondary battery, the battery module, or the battery pack is used as a power source of the apparatus or an energy storage unit of the apparatus.
